# EUROPÄISCHE PATENTANMELDUNG

(11) **EP 2 120 032 A2**
(43) Veröffentlichungstag der Anmeldung: **18.11.2009**
(21) Anmeldenummer: 09006304.1
(22) Anmeldetag: 09.05.2009
(51) Int. Cl.: G01M 3/26

(54) **Vorrichtung zum Ableiten eines ausgetretenen Fluids**

(30) Priorität: 12.05.2008 DE 202008006557 U
(71) Anmelder: Dzampaeva, Tatjana, 10119 Berlin (DE)
(72) Erfinder: Dzampajev, Ilja, 10119 Berlin (DE)

(57) **Zusammenfassung**

Die Erfindung betrifft eine Vorrichtung zum Ableiten und ggf. Entsorgen eines bei einer Leckage im Fluidsystem ausgetretenen Fluids, die dadurch die Sicherheit des benutzten Fluidsystems bedeutend erhöht, zuverlässig, kostengünstig ist und als zweckmäßige Ergänzung der herkömmlichen Aqua-Stop-Systeme dienen kann. Sie kann bei Fluidsystemen, wie beispielsweise Wasserfilteranlagen, Heizungsvorrichtungen oder Kühlsystemen zum Einsatz kommen.

Vorrichtung zum Ableiten eines ausgetretenen Fluids (6) aus einem Fluidsystem bei der die vom Fluid durchströmten Teile des Fluidsystems einzeln und/oder zusammengefasst beginnend bei einem Zuflussventil oder einer Anschlussmuffe und endend bei einem Entnahmeventil mit einer fluidundurchlässigen Umhüllung (12) oder einem Überzug (3) oder einem fluidundurchlässigen Abdeckmantel (2) versehen sind, derart, dass austretendes Fluid (6) einem zentralen Auffangbehälter (7) zuleitbar ist, wobei durch das im Auffangbehälter (7) gesammelte Fluid (6) eine Absperreinrichtung (Fluidfluss-Unterbrechungssystem 8) für den Fluidstrom aktivierbar ist und/oder das gesammelte ausgetretene Fluid (6) aus dem Auffangbehälter (7) einer dafür vorgesehenen Abflussleitung (17) zuleitbar ist. (Fig. 5)

## Beschreibung

Die Erfindung betrifft eine Vorrichtung zum Ableiten eines bei einer Leckage aus einem Fluidsystem ausgetretenen Fluids zu einem etwaigen Fluidfluss-Unterbrechungssystem.

### Stand der Technik

In der Praxis treten bei Fluidsystemen, wie beispielsweise Wasserfilteranlagen, Heizungsvorrichtungen, Kühlsystemen und ähnlichen, Leckagen oder Undichtheiten auf, welche zu einem Austreten von Fluiden aus dem Fluidsystem führen können. Dies führt in der Regel nicht nur zu einer Verminderung des Wirkungsgrades des Fluidsystems, sondern kann auch zu Überschwemmungen des Umgebungsbereichs und zu daraus resultierenden Schädigungen an Vorrichtung in der Umgebung des Fluidsystems führen. Bei Verwendung giftiger Stoffe im Fluidsystem sind außerdem die Umwelt und sich in Umgebungsbereich des Systems aufhaltende Lebewesen gefährdet.

Um ein Austreten größerer Fluidmengen aufgrund der Leckage im Fluidsystem zu vermeiden und um eine gefahrlose Reparatur des Fluidsystems zu erlauben, ist es notwendig, möglichst frühzeitig eine Leckage festzustellen und den Zufluss des Fluids in das System oder in ein Teilbereich des Systems, welches verdächtig wird, die Leckage aufzuweisen, zu unterbrechen. Ein System, welches eine Leckage in einem von Wasser durchflossenen Fluidsystem erkennt, und daraufhin einen Wasserzufluss stoppt, wird im Allgemeinen als Aqua-Stop-System oder Fluidfluss-Unterbrechungssystem (künftig Absperreinrichtung genannt) bezeichnet.

Eine Möglichkeit zur Ermittlung von Leckagen besteht darin, den Zufluss eines Fluids in das Fluidsystem mit dem gesamten Abfluss des Fluids aus dem Fluidsystem zu vergleichen und bei Vorhandensein eines Unterschieds zwischen Zufluss und Abfluss einen Fluidfluss zu unterbrechen. Bei einer anderen Herangehensweise an das Problem des Ermittelns einer Leckage wird direkt ein aus dem Fluidsystem fließendes Fluid als Indikator für das Vorhandensein einer Leckage verwendet. Bei diesen Systemen wird das aufgrund einer Leckage aus einem Fluidsystem fließende Fluid in einem unter dem Fluidsystem angeordneten Behälter aufgefangen und gesammelt. Dabei reagiert die Absperreinrichtung üblicherweise bereits bei kleinen Mengen des Fluids im Auffangbehälter. Bekannte Systeme dieser Art funktionieren bspw. mechanisch - mittels Nutzung der Kraft des entstehenden Auftriebs für das Auslösen, elektronisch - dank entsprechender Sensoren oder chemisch - mithilfe löslicher Materialien, die im festen Zustand das Schießen des vorgespannten Ventils verhindern, sich dann bei einer Leckage im Fluid auflösen, und das Ventil automatisch geschlossen wird.

Falls das komplette Fluidsystem kompakt in einem abgeschlossenen Gehäuse (wie z.B. bei einer Waschmaschine) untergebracht ist, wandert das ausgetretene Fluid bei einer Leckage sicher in den Auffangbehälter und kann eine solche Absperreinrichtung auslösen. Ein erheblicher Nachteil des Standes der Technik entsteht dann, wenn das Fluidsystem z.B. aufgrund der langen Fluidleitungen ganz oder teilweise frei liegt, und einige Verbindungen oder Rohrleitungen bspw. Ventile, Muffen, Rohre oder Schläuche außerhalb der Reichweite des Auffangbehälters verlaufen (z.B. bei Haushaltsfilteranlagen), so würde das ausgetretene Fluid nicht zwangsläufig in den Auffangbehälter abfließen. Selbst wenn der Auffangbehälter in einem solchen System unmittelbar unter einer möglichen Leckagestelle liegt, kann das Fluid, das bspw. unter hohem Druck steht, gänzlich oder teilweise in eine andere Richtung (nach oben und/oder zur Seite) verspritzt werden und somit ebenfalls nicht in dem dafür vorgesehenen Behälter landen. Die Absperreinrichtung würde in solchen Fällen gar nicht oder zu spät ausgelöst werden, was zu einer Überflutung führen kann.

Ein weiterer erheblicher Nachteil des Standes der Technik taucht auf, wenn eine Leckage in den Fluidleitungen der unter Druck stehenden Behältnisse des Fluidsystems eintritt. In diesem Fall könnte sich der Auffangbehälter der Absperreinrichtung trotz der versperrten Hauptzuflussleitung überfüllen und das ausgetretene Fluid würde auslaufen. Schließlich ist der Stand der Technik vollkommen untauglich, wenn ein Leck in der eigenen Hauptzuflussleitung der Absperreinrichtung entsteht.

In diesem Zusammenhang ist eine zusätzliche Vorrichtung vonnöten, um das Fluid bei einer etwaigen Leckage aufzufangen, in den zum Unterbrechen des Fluidflusses vorgesehnen Behälter sicher zu leiten und/oder gar eigenständig zu entsorgen.

### Die Erfindung

Aufgabe der Erfindung ist daher das Bereitstellen einer Vorrichtung zum Ableiten und ggf. Entsorgen eines bei einem Leck im Fluidsystem ausgetretenen Fluids, die dadurch die Sicherheit des benutzten Fluidsystems bedeutend erhöht, zuverlässig, kostengünstig ist und als zweckmäßige Ergänzung der herkömmlichen Fluidfluss-Unterbrechungssysteme dienen kann.

Gegenüber dem Stand der Technik hat die Erfindung den Vorteil, dass das austretende Fluid im Falle einer Leckage auch außer Reichweite eines in einer Absperreinrichtung angeordneten Auffangbehälters aufgefangen und zu ihm überführt werden kann. Somit können in Zukunft die Auffangbehälter der bekannten Absperreinrichtungen wesentlich kompakter ausgeführt werden oder auf fremde Auffangbehälter gar verzichtet werden, was einerseits Platz sparend ist und andererseits Materialkosten senken würde. Dabei kann eine konventionelle Absperreinrichtung mit der Erfindung flexibel ergänzt werden, was die Sicherheit des ganzen Systems bedeutend erhöht. Wobei weder die eingesetzte Absperreinrichtung noch der meist dazu gehörige Auffangbehälter ein Teil dieser Erfindung sind.

Im Gegensatz zum Stand der Technik verhindert die Erfindung außerdem eine Überflutung bei einer Leckage der Fluidleitungen eigener unter Druck stehender Behälter des Fluidsystems. Schließlich ist die Erfindung im Vergleich zum Stand der Technik selbst bei einem Leck in der Hauptzuflussleitung zur Absperreinrichtung gegen Überschwemmung sicher.

Beschreibung bevorzugter Ausführungsbeispiele

Die Erfindung wird im Folgenden anhand von Ausführungsbeispielen unter Bezugnahme auf Zeichnungen näher erläutert. Es zeigen
**Fig. 1** die Ableitvorrichtung mit Abdeckmantel inkl. Fluidsystem (am Beispiel einer Filteranlage) und eine Darstellung einer etwaigen Absperreinrichtung mit Auffangbehälter,
**Fig. 2** die hermetisch gebildete Ableitvorrichtung mit Umhüllung inkl. Fluidsystem (am Beispiel einer Filteranlage) und eine Darstellung einer etwaigen Absperreinrichtung,
**Fig. 3** eine Weiterbildung der Ableitvorrichtung nach **Fig. 2** mit Verwendung eines Steigrohrs,
**Fig. 4** **und** **4a** weitere Ausführungsformen der Ableitvorrichtung nach **Fig. 3** mit jeweils einer Austrittsöffnung im oberen oder im unteren Teil der Umhüllung,
**Fig. 5** die hermetisch gebildete Ableitvorrichtung mit Umhüllung inkl. einer UO-Anlage und eine Darstellung einer etwaigen Absperreinrichtung und
**Fig. 6** einen Bodeneinsatz, um bereits kleinste ausgetretene Mengen eines Fluids sicher zu erfassen und ableiten zu können.

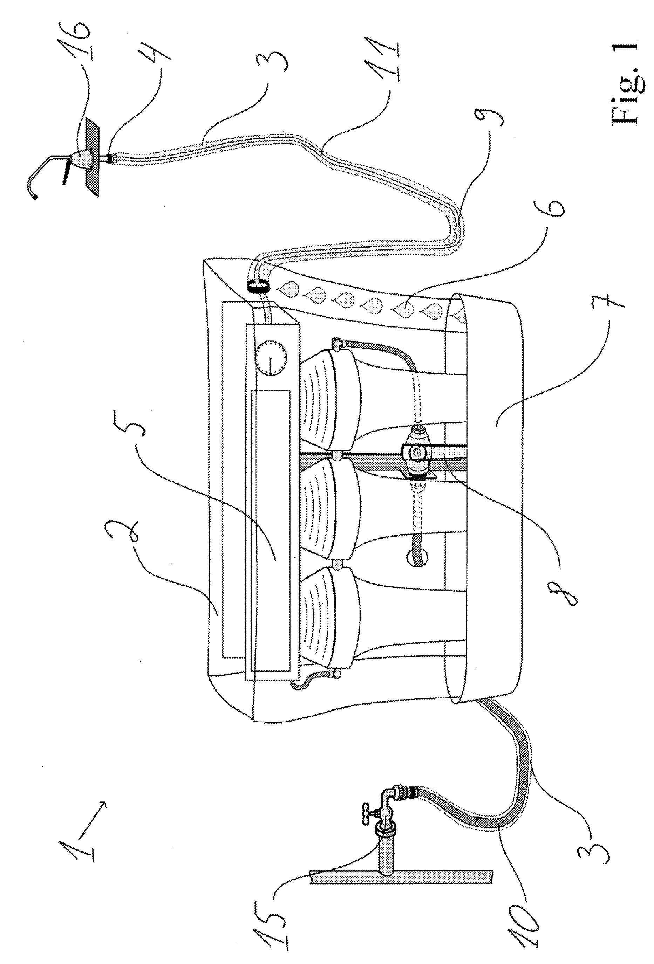

Gemäß der **Fig. 1** umfasst in einer bevorzugten Ausführungsform der Erfindung die Vorrichtung zum Ableiten eines ausgetretenen Fluids (abgek. Ableitvorrichtung) 1 einen aus einem wasserundurchlässigen Material gebildeten, entsprechend geformten Abdeckmantel 2, der überragende Teile eines in und/oder über einem Auffangbehälter 7 befindlichen Fluidsystems 5 von oben und/oder seitlich abdeckt. Dabei werden die freien Seiten des Abdeckmantels in den Auffangbehälter 7 so eingesteckt, dass das ausgetretene (bspw. unter hohem Druck stehende) Fluid 6 bei einer möglichen Leckage sich nicht länger außerhalb des Auffangbehälters 7 verteilen kann, sondern allein aufgrund seiner Schwerkraft, drucklos zwangsläufig über die Innenseite des Abdeckmantels 2 in den Auffangbehälter 7 abfließt. Eine feste Verbindung des Abdeckmantels 2 mit dem Auffangbehälter 7 ist somit nicht unbedingt erforderlich, jedoch mittels z.B. Klebe-, Klett- oder Reißverschlusses möglich.

Der Abdeckmantel kann durchsichtig und elastisch aus Kunststoffen, wie Zellophan, Polyethylen, PP, PVC etc. oder aus einem wasserundurchlässigen Fasermaterial gebildet werden. Dies hat den Vorteil, dass die Vorrichtung flexibel bleibt und so bei verschiedenen Fluidsystemen zum Einsatz kommen kann. Die Durchsichtigkeit des Abdeckmantels hat den Vorteil, dass eine eventuell eingetretene Leckage optisch sofort erkannt werden kann. Eine Bauweise aus festen Materialien, wie Metall, Holz oder harter Kunststoff müsste auf jeden Fluidsystemtyp und ggf. Auffangbehälter passend angefertigt werden.

In einer vorteilhaften Ausgestaltung der Erfindung sind im Bezug auf **Fig. 1** Überzüge 3 vorgesehen, die mit dem Abdeckmantel 2 an einem ihrer freien Enden verbunden sind und sämtliche unter Druck freistehende Fluidleitungen, wie Schläuche und/oder Rohre 11 und Hauptzuflussleitung 10 des Fluidsystems 5, welche außerhalb des Bereichs des Auffangbehälters 7 und des Abdeckmantels 2 liegen, von Außen komplett umhüllen. Hierbei stellen die Überzüge eine Art zweite drucklose Rohrschicht dar, die das ausgetretene Fluid 6 auch bei einer Leckage in der Fluidleitungen 11 des Fluidsystems 5 zum Abdeckmantel 2 und schließlich in den Auffangbehälter 7 befördern. Die Überzüge 3 können mit dem Abdeckmantel 2 an der für das entsprechende Fluidsystem günstigsten Stelle verbunden werden. Für die Herstellung der Überzüge können vergleichbare Werkstoffe, wie bei dem Abdeckmantel eingesetzt werden.

Auch können die Überzüge bspw. flexible und/oder feste Plastikschläuche umfassen, die einen größeren Durchmesser als die Fluidleitungen des Fluidsystems aufweisen und leicht über diese übergezogen werden können. Solche Schläuche können in die dafür vorgesehenen Öffnungen in dem Abdeckmantel bequem eingesteckt werden, so dass das Fluid durch sein Eigengewicht in den Auffangbehälter hinunter fließen kann. Schließlich besteht die Möglichkeit, den Abdeckmantel und die Überzüge (vergleichbar mit Ärmeln eines Regenmantels) auch als ein Ganzes herzustellen oder dauerhaft miteinander zu verbinden (z.B. durch Verschweißen). Eine weitere Alternative besteht in der Verwendung von Anschlusstüllen in den Eingängen des Abdeckmantels, über die sich die Überzüge zum Anschluss schieben lassen und dichtend anliegen.

In einer zweckmäßigen Weiterführung der Erfindung sind gemäß **Fig. 1** an anderen Enden der Überzüge 3 flexible Verbindungsmanschetten 4 vorgesehen, welche sämtliche äußere Verbindungen und/oder Teile z.B. Ventile, Hähne oder Muffen (in diesem Ausführungsbeispiel Leitungsventil 15, Entnahmehahn 16) eines Fluidsystems 5 mit den Überzügen 3 wasserdicht verbinden. Die Manschetten 4 verhindern das Austreten des Fluids 6 an den Stellen, an denen die mit den Überzügen 3 versehene Fluidleitungen 11, 10 des Fluidsystems 5 an Ventile, Hähne (hier 15, 16) angeschlossen sind. So würden sich die Überzüge bei einer eventuellen, hier dargestellten Leckagestelle 9 in der langen Leitung zum Entnahmehahn eines Fluidsystems 5 mit dem ausgetretenen Fluid 6 selbst dann auffüllen, wenn die äußeren Endteile 15, 16 auf einem niedrigeren Niveau als Auffangbehälter 7 liegen. Demzufolge wird das ausgetretene Fluid 6 nur in Richtung des Abdeckmantels 2 und somit unabwendbar in den Auffangbehälter 7 abfließen können und somit die entsprechende Absperreinrichtung 8 auslösen. Innen können eingangsseitig im Abdeckmantel 2 Spritzschutzelemente angeordnet sein, die das zugeführte Fluid in Richtung Boden leiten.

Die Manschetten können unterschiedlich entsprechend der Form und Beschaffenheit des jeweiligen äußeren Schlussteils angepasst werden. Beispielsweise eignet sich hier ein zylinderförmiges Röhrchen (z.B. Schrumpfschlauch) und/oder Band aus synthetischem oder natürlichem Gummi, bspw. Kautschuk oder Silikon, das mit einem freien Ende auf die Überzüge und mit anderem Ende auf den jeweiligen Schlussteil aufgezogen wird. Dabei können solche Manschetten ggf. mit bspw. Schellen, Klammern und/oder Kabelbindern gegen Verrutschen gesichert werden. Die Manschetten können auch in die Überzüge integriert werden. Auch können sie aus festen Materialien ausgeführt und an das bspw. Gewinde des jeweiligen Schlussteils aufgedreht werden. Da bei einer möglichen Leckage in den Überzügen (bei dieser Ausführungsform) kein Druck entsteht, ist die Verbindung der Überzüge mit äußeren Endteilen auch mit einem umwickelnden Klebestreifen als Manschette theoretisch möglich.

In einer weiterführenden Ausgestaltung der Erfindung kann der flexible Abdeckmantel (künftig Umhüllung) anstelle eines Auffangbehälters das ganze Fluidsystem auch von unten bedecken. So kann es auf den Auffangbehälter der eingesetzten Absperreinrichtung gänzlich verzichtet werden. Dabei ist es wichtig, dass der untere Teil, der Boden einer solchen rundum einwickelnden Umhüllung etwa die Form eines Auffangbehälters hat, und absolut wasserdicht ist. Eine derart gebildete Umhüllung könnte als ein Ganzes hergestellt werden, wobei das Fluidsystem in diese bspw. durch einen mit Klebe-, Klett-, Reiß-, Gleit-, Schiebe- oder Druckverschluss versehnten Schlitz von oben hineingestellt wird. Die eingesetzte Absperreinrichtung wird dabei z.B. an dem Gehäuse des entsprechenden Fluidsystems befestigt. Diese Ausführungsform könnte Produktionskosten und Platz erheblich sparen. Die Umhüllung kann aus gleichen und/oder ähnlichen Stoffen wie Abdeckmantel hergestellt werden.

Die Sicherheit der Erfindung im Gegensatz zum Stand der Technik erhöht sich beträchtlich, da das Überführen des ausgetretenen Fluids über die Überzüge und Abdeckmantel drucklos verläuft, und somit die Wahrscheinlichkeit der eigenen Leckage der Vorrichtung aufgrund hoher Drücke, auf ein Minimum reduziert wird. Dazu ist es (besonders bei der rundum einwickelnden Umhüllung statt Auffangbehälter) wichtig, dass mindestens eine ausreichende Austrittsöffnung in der Vorrichtung für das Entweichen der Luft vorgesehen wird. Eine solche Austrittsöffnung wäre z.B. in dem oberen Teil des Abdeckmantels oder ggf. Umhüllung bevorzugt. Auch wenn der Abdeckmantel in den Auffangbehälter lediglich hineingesteckt wird und/oder wenn die Überzüge in den Abdeckmantel (oder ggf. in die Umhüllung) nur locker durchgesteckt werden, kann das Fluid durch Erdanziehung, im freiem Fall in den Auffangbehälter gelangen. Eine derart lockere Verbindung der Teile der Vorrichtung würde ebenfalls für freies Entweichen der Luft sorgen.

### Die hermetisch gebildeten Ausführungsformen der Erfindung

Im Fall einer Leckage wird der Hauptzufluss des Fluids (z.B. Leitungswasser bei Filteranlagen) bekanntermaßen durch eine Absperreinrichtung gestoppt. Bei einer erdenklichen Leckage in der Fluidleitung einer anderen, unter Druck stehenden Quelle des Fluidsystems (insbesondere bei Fluidsystemen mit einem Vorratstank oder Sammelbecken) würde das Fluid dennoch weiterhin auslaufen können. Ein solches, unter Druck stehendes Behältnis würde sich nämlich trotz der geschlossenen Hauptleitung vollständig entleeren, was zu einer Überflutung führen kann. Zwar ist hier der Schaden im Gegensatz zu einer Leckage beim fortwährend laufenden Leitungsfluid begrenzt, kann jedoch je nach Größe des Behältnisses gleichwohl beachtliches Ausmaß nehmen.

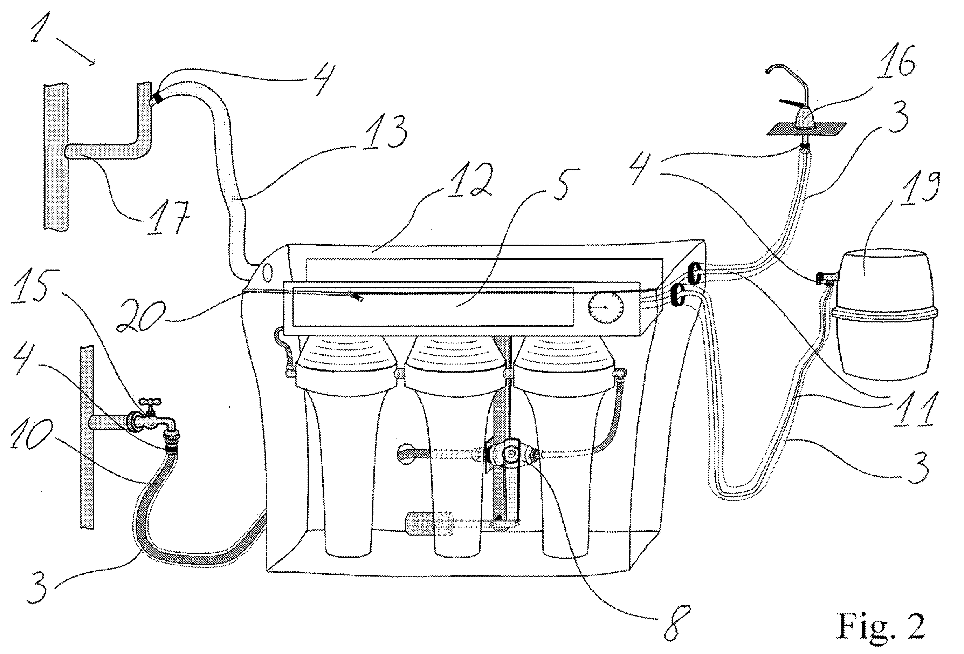

Im Bezug auf **Fig. 2** wird in diesem Fall die Ableitvorrichtung 1 vollkommen hermetisch gebildet. Dabei wird der Öffnungsschlitz 20 in der Umhüllung 12 nach dem Einsetzen des Fluidsystems 5 in die Ableitvorrichtung 1 mittels bspw. einer Verschlussart (welche z.B. bei Gleit-, Schiebe- oder Druckverschlussbeutel verwendet wird) wasser-, und luftdicht versiegelt. Auch kann hier ein dichter Reißverschluss zum Einsatz kommen, welcher z.B. bei den Trockentauchanzügen verwendet wird. Ferner werden die Überzüge 3 hermetisch z.B. durch Gummidichtungen, Muffen, Fittings oder mittels Schlauchtüllen an die Umhüllung 12 angebracht oder gar fest damit verbunden. Schließlich wird bspw. ein zusätzlicher Überzug (künftig Ablassrohr) 13 an die Abflussleitung z.B. Kanalisation 17 (ähnlich wie Wasch-, oder Spülmaschine) angeschlossen, wodurch das in der undurchdringlich verriegelten Ableitungsvorrichtung 1 sich sammelnde, überschüssige Wasser sowie Luft drucklos in den Abfluss 17 entweichen können. Hierbei enthält das Ablassrohr 13 keine Fluidleitungen des Fluidsystems 5 und spielt eher die Rolle eines "Sicherheits-IAblassventils". Da eine luft-, und wasserdichte Verbindung eines Auffangbehälters mit dem Abdeckmantel problematisch sein dürfte, ist seine Verwendung in diesem Fall unvorteilhaft, aber dennoch z.B. auch mittels dichten Reiß-, Gleit-, Schiebe- oder Druckverschlusses etc. möglich.

Bei den unten beschriebenen Ausführungsformen trägt der aufgrund einer Leckage in der hermetisch versiegelten Ableitvorrichtung entstehende leichte Überdruck (ähnlich wie bei einer Sprühdose) dazu bei, dass das überschüssige Fluid hinauf befördert und über das Ablassrohr vollständig entsorgt werden kann. Wenn das ausgetretene Fluid die im Folgenden beschriebene Austrittsöffnung erreicht hat, wird es nunmehr Aufgrund des Überdrucks hinaufgedrückt. Dies ist vorteilhaft wenn die Ableitvorrichtung sich nicht unmittelbar über einer Abwasserleitung befindet, und das Fluid daher zum Entsorgen gehoben werden muss. Bei diesen Ausführungsformen ist es besonders wichtig, dass die Überzüge und Endteile des Fluidsystems von den Verbindungsmanschetten auch Luftdicht verbunden werden.

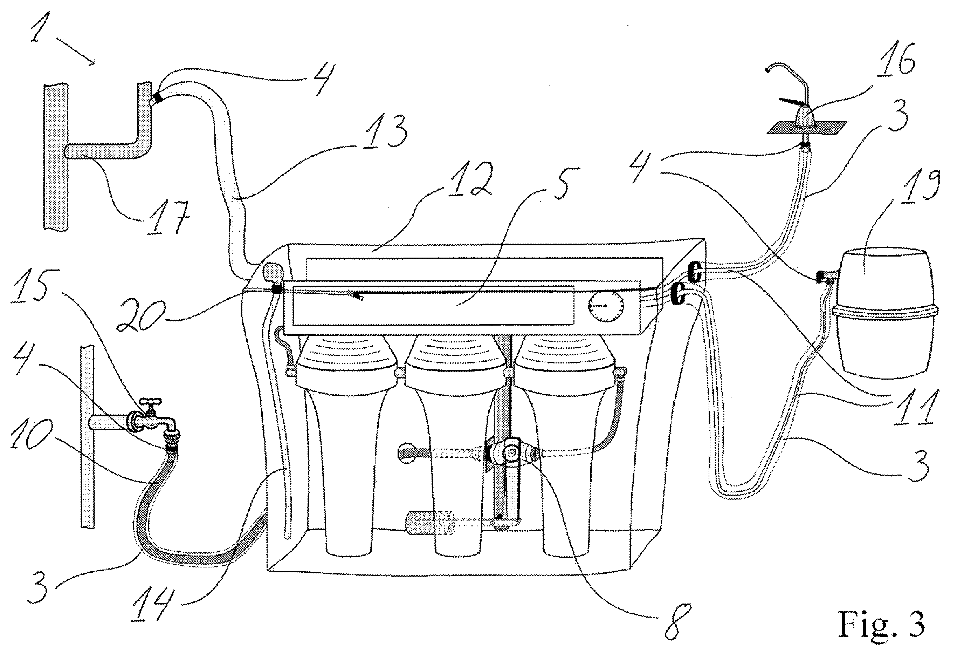

Wenn das Ablassrohr 13 aus weichem Material (z. B. bei Verwendung eines Überzuges als Ablassrohr) besteht, oder wenn die Überzüge 3 und Umhüllung 12 (oder ggf. Abdeckmantel) ein Ganzes bilden, könnte ein solches Ablassrohr 13 im Inneren der Vorrichtung mit einem zusätzlichen härteren Steigrohr 14 auf die besagte Höhe verlängert werden **(****Fig. 3****).**

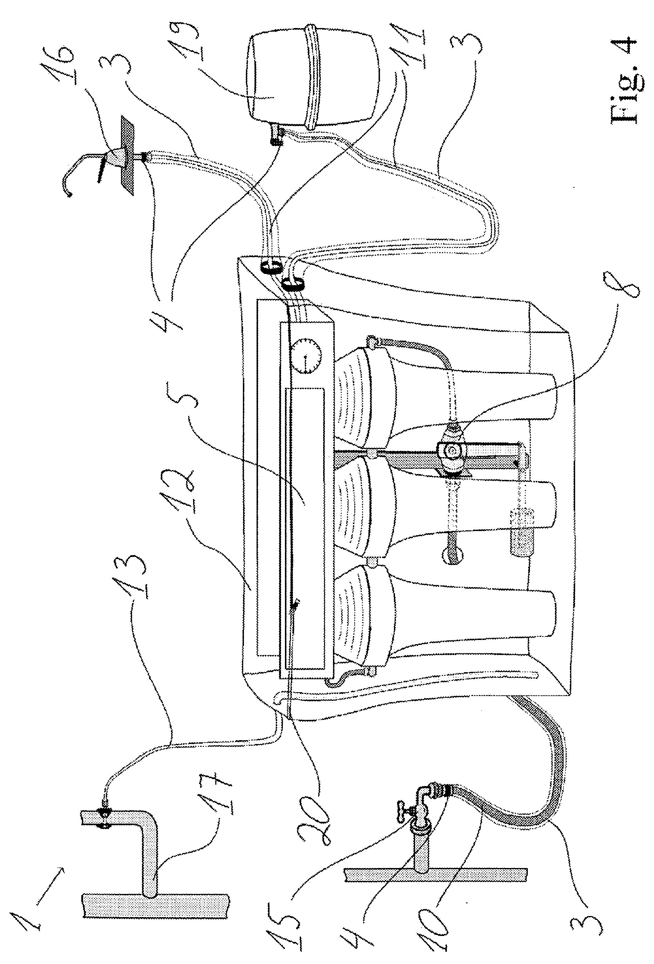

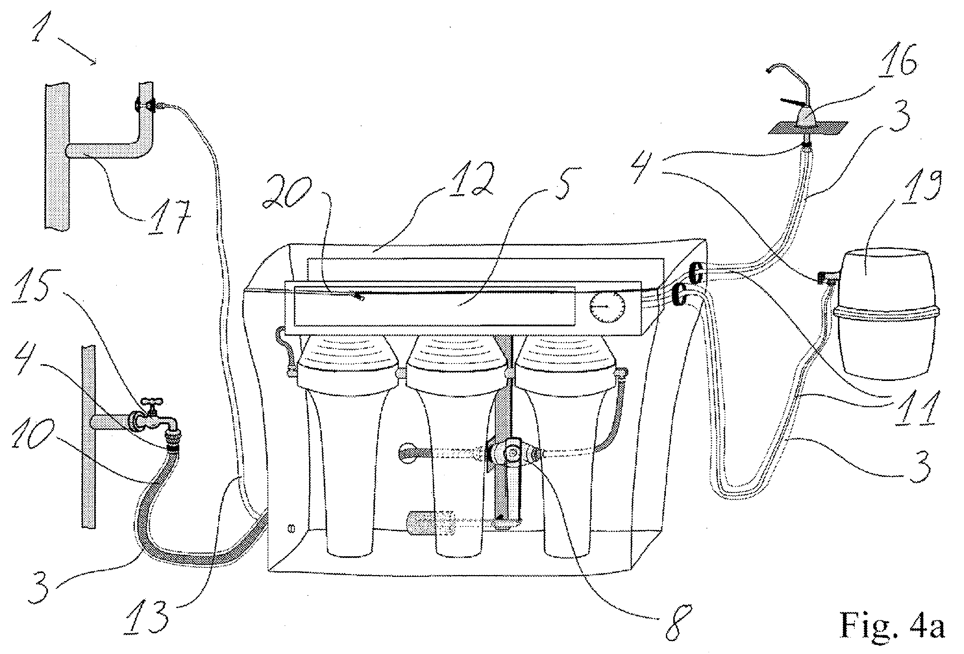

Bei einem Ablassrohr 13 aus einem harten Material wie Kunststoff (z.B. PVC oder PE-Rohr), kann es im Inneren der Umhüllung 12 beinahe bis zum Boden der Umhüllung durchgesteckt werden. Dabei ist es wichtig, das Ablassrohr 13 so tief zu platzieren, dass seine innere Öffnung etwas höher als das Niveau liegt, bei welchem im Falle einer Leckage der Fluidhochstand sicher genügen würde, die Absperreinrichtung 8 auszulösen **(****Fig. 4****).**

Eine andere günstige Lösungsvariante gemäß **Fig. 4a** ist es, im unteren Teil der Umhüllung 12 (oder ggf. in der Seite des hier nicht dargestellten Auffangbehälters), auf der oben beschriebenen Höhe, eine Austrittsöffnung vorzusehen, an die jede Art des Ablassrohrs 13 von Außen angeschlossen oder durchgesteckt werden kann.

Die zuletzt beschriebenen Konstruktionen haben den Vorteil, dass die Ableitvorrichtung sich dabei nicht vollständig auffüllen muss, was bspw. das Äußere oder empfindliche Teile, wie Messgeräte oder Elektronik eines Fluidsystems beschädigen könnte. Lediglich der für das Auslösen der Absperreinrichtung notwendige Fluidhochstand im unteren Teil der Umhüllung oder ggf. im Auffangbehälter, an einer meist unanfälligen Stelle eines verwendeten Fluidsystems wird in diesem Fall erreicht.

Die hermetisch gebildeten Ausführungsformen der Ableitvorrichtung haben allgemein den Vorteil, die Sicherheit des gesamten Systems bedeutend zu erhöhen. Selbst wenn die Absperreinrichtung aus etlichen Gründen versagen sollte, kann es bei einer dieser Bauweisen kaum zu einer Überschwemmung kommen. Sogar die eigene Hauptzuflussleitung einer Absperreinrichtung, nämlich vom Fluidleitungsrohr (z.B. Wasserleitung) zum Absperrventil der Absperreinrichtung, die vom Stand der Technik vor einer Überflutung funktionsbedingt vollkommen ungeschützt ist, kann mit einer derartigen Ableitvorrichtung gesichert werden. Zwar kann hier eine Leckage unmöglich gestoppt werden, da Hauptzuflussleitung sich vor dem Absperrventil der Absperreinrichtung befindet. Dennoch kann das ausgetretene Leitungsfluid mit Hilfe eines oben beschilderten Überzugs kontinuierlich in den Abfluss überführt werden, womit eine Überschwemmung verhindert und der Schaden lediglich auf bspw. Leitungswasserverlust minimiert werden kann. Demzufolge ist der Gebrauch einer Absperreinrichtung bei hermetischen Vorrichtungen immerhin äußerst hilfreich, jedoch nicht zwingend erforderlich.

### Die Benutzung der Erfindung für Umkehr-Osmose-Filteranlagen

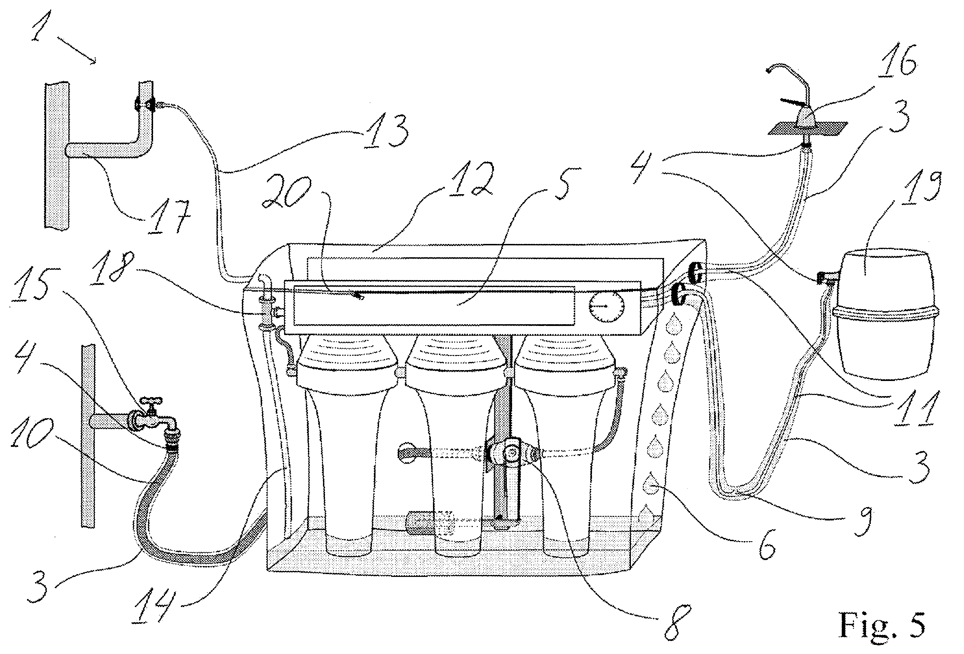

Im Bezug auf **Fig. 5** verfügt nach heutigem Stand der Technik eine konventionelle Umkehr-Osmose-Filteranlage (künftig UO-Anlage) 5 funktionsbedingt über eine Abwasserleitung 13, die an den Abfluss (Kanalisation) 17 fest angeschlossen ist, über welche das bei dem Filterungsprozess entstehende Abwasser (ein so genanntes Konzentrat) automatisch entsorgt wird. Das gereinigte Wasser (Permeat) 6 hingegen wird in einen unter Druck stehenden Vorratstank 19 befördert, welcher schließlich (meist über einen Nachfilter) mit einem Entnahmehahn 16 verbunden ist.

Bei der Benutzung der Ableitvorrichtung für UO-Anlagen kann eigene Abwasserleitung der UO-Anlage auch für das Abfließen des überschüssigen Wassers 6 bei einer eventuellen Leckage verwendet werden. Dies würde den Bedarf eines zusätzlichen Ablassrohrs ersparen. Dieses Ausführungsbeispiel kann ebenso mit jedem anderen Fluidsystem, welches ähnlich aufgebaut ist oder über eigene Abwasserleitung verfügt, eingesetzt werden.

Die Funktion wird im Folgenden mit Hilfe der **Fig. 5** näher erläutert. Hierbei wird das oben beschriebene Steigrohr 14 im Inneren der Ableitvorrichtung 1 direkt an die Abwasserleitung 13 der UO-Anlage 5 über ein Rückschlagventil 18 angeschlossen. Das Rückschlagventil 18 soll verhindern, dass das von der UO-Anlage 5 produzierte Abwasser im Normalbetrieb, d. h. bei nicht Vorhandensein einer Leckage, in die Ableitvorrichtung 1 gelangt. Da die Abwasserleitung 13 drucklos und somit von einer Leckage verhältnismäßig unanfällig ist, benötigt sie keinen Überzug. Es ist deshalb wichtig, dass die Durchgangsöffnung der Abwasserleitung 13 durch die Umhüllung 12 (bspw. durch Verwendung einer Schottverbindung) dicht ist. Sollte die UO-Anlage 5 z.B. im Schlauch des Vorratstanks 19 (hier an der Leckagestelle 9 dargestellt) oder des Entnahmehahns 16 ein Leck bekommen, läuft das ausgetretene Wasser 6 über die Überzüge 3 zur Umhüllung 12 und sammelt sich im unteren Teil der Umhüllung 12. Somit wird die Wasserzuflussleitung 10 durch das Auslösen der Absperreinrichtung 8 zunächst unterbrochen. Dies bedeutet, dass kein Leitungswasser aus dem Wasserleitungsventil 15 nunmehr in die undichte UO-Anlage 5 eindringen kann. Lediglich das Wasser 6 aus dem Vorratstank 19 wird weiterhin austreten, womit der oben beschriebene leichte Überdruck entsteht. Demzufolge öffnet sich das Rückschlagventil 18, wodurch das überschüssige Wasser 6 aus dem Vorratstank 19 über das Steigrohr 14 und die Abwasserleitung 13 der UO-Anlage 5 in den Abfluss 17 entweichen kann.

Das Rückschlagventil könnte so gebildet werden, dass es sich erst bei einem bestimmten Überdruck öffnet. So kann die Ableitvorrichtung bereits vor der Inbetriebnahme mit etwas Luft aufgefüllt (z. B. aufgeblasen) werden, damit es, nach dem Auslösen der Absperreinrichtung, nicht allzu großer Fluidmenge bedarf, zum Herausdrücken des ausgetretenen Fluids notwendigen Überdruck zu erzeugen. Für diesen Zweck kann eine gesonderte Öffnung (z.B. Aufblasmundstück) vorgesehen werden. Die günstigste Höhe für das Einsetzen des Steigrohrs ist dabei entsprechend anzupassen.

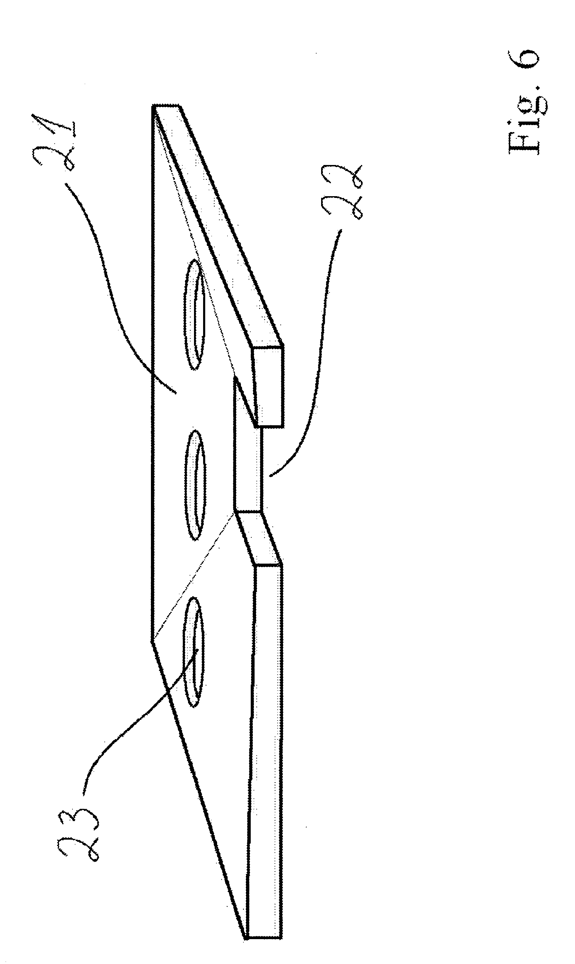

Eine weitere Ausgestaltung der Ableitvorrichtung 1 sieht vor, dass im Auffangbehälter 7 oder der Umhüllung 12 jeweils bodenseitig ein Bodeneinsatz 21 angeordnet ist, der die Bodenfläche bis auf einen Ausschnitt 22 ausfüllt **(****Fig.6****).** In den Ausschnitt 22 greift mindestens der Signalgeber (Schwimmer etc.) der Absperreinrichtung ein, vorteilhafterweise auch das untere Ende des Steigrohres 14 oder ist die Einlassmündung für das Ablassrohr 13 dort positioniert. Mit dieser Anordnung des Bodeneinsatzes 21 wird erreicht, dass ausgetretenes Fluid sich hier sammelt, und so schon kleine Mengen erkannt und ggf. entfernt werden können.

Das Sammeln des Fluids kann noch unterstützt werden, indem die Deckfläche des Bodeneinsatzes 21 in Richtung Ausschnitt 22 ein Gefälle aufweist. Um eine waagerechte Aufstellfläche für die Elemente des Fluidsystems zu haben, kann das Gefälle durch Aufnahmeöffnungen 23 für diese wieder ausgeglichen werden.

### Bezugszeichenliste

- 1: Ableitvorrichtung
- 2: Abdeckmantel
- 3: Überzüge
- 4: Verbindungsmanschetten
- 5: Fluidsystem (Filteranlage / UO-Anlage)
- 6: ausgetretenes Fluid
- 7: Auffangbehälter
- 8: Absperreinrichtung
- 9: Leckagestelle
- 10: Hauptzuflussleitung
- 11: Fluidleitungen
- 12: Umhüllung
- 13: Ablassrohr / Abwasserleitung (bei UO-Anlage)
- 14: Steigrohr
- 15: Leitungsventil
- 16: Entnahmehahn
- 17: Abflussleitung
- 18: Rückschlagventil
- 19: Vorratstank
- 20: Öffnungsschlitz
- 21: Bodeneinsatz
- 22: Ausschnitt im Bodeneinsatz
- 23: Aufnahmeöffnungen

## Patentansprüche

1. Vorrichtung zum Ableiten eines ausgetretenen Fluids (6) aus einem Fluidsystem bei der die vom Fluid durchströmten Teile des Fluidsystems einzeln und/oder zusammengefasst beginnend bei einem Zuflussventil oder einer Anschlussmuffe und endend bei einem Entnahmeventil mit einer fluidundurchlässigen Umhüllung (12) oder einem Überzug (3) oder einem fluidundurchlässigen Abdeckmantel (2) versehen sind, derart, dass austretendes Fluid (6) einem zentralen Auffangbehälter (7) zuleitbar ist, wobei durch das im Auffangbehälter (7) gesammelte Fluid (6) eine Absperreinrichtung (Fluidfluss-Unterbrechungssystem 8) für den Fluidstrom aktivierbar ist und/oder das gesammelte ausgetretene Fluid (6) aus dem Auffangbehälter (7) einer dafür vorgesehenen Abflussleitung (17) zuleitbar ist.

2. Vorrichtung nach Anspruch 1, **dadurch gekennzeichnet, dass** der Auffangbehälter (7) von Teilen des Fluidsystems seitlich überragt wird und vorzugsweise unterhalb von Filteranlagen (5) des Fluidsystems angeordnet ist.

3. Vorrichtung nach einem der Ansprüche 1 oder 2, **dadurch gekennzeichnet, dass** der Abdeckmantel (2) mit seinem unteren Ende (freie Seiten) in den Auffangbehälter (7) hineinragt (einsteckt), so dass am Abdeckmantel (2) innen ablaufendes Fluid in den Auffangbehälter (7) hineinläuft.

4. Vorrichtung nach Anspruch 1 bis 3, **dadurch gekennzeichnet, dass** der Abdeckmantel (2) mit dem Auffangbehälter (7) über eine lösbare Verbindung in Form eines Klebe-, Klett-, Reiß-, Gleit-, Schiebe- oder Druckverschlusses verbunden ist.

5. Vorrichtung nach einem der Ansprüche 1 bis 4, **dadurch gekennzeichnet, dass** der Auffangbehälter (7) integrierter Bestandteil einer Umhüllung (12) ist.

6. Vorrichtung nach einem der Ansprüche 1 bis 5, **dadurch gekennzeichnet, dass** der Abdeckmantel (2) oder die Umhüllung (12) jeweils mit den Überzügen (3) für Fluidleitungen (11) einteilig zur Ummantelung des Fluidsystems bereitgestellt sind (Regenmantelprinzip), indem die Überzüge (3) direkt in diese integriert sind und/oder die Überzüge (3) in Öffnungen des Abdeckmantels (2) oder der Umhüllung (12) eingesteckt sind.

7. Vorrichtung nach einem der Ansprüche 1 bis 5, **dadurch gekennzeichnet, dass** die Überzüge (3) über z.B. Gummidichtungen, Muffen, Fittings und/oder Schlauchtüllen hermetisch mit der Umhüllung (12) verbunden sind.

8. Vorrichtung nach einem der Ansprüche 1 bis 7, **dadurch gekennzeichnet, dass** der Abdeckmantel (2) und/oder die Umhüllung (12) und/oder die Überzüge (3) aus flexiblen Kunststoffen wie Zellophan, Polyethylen, PP, PVC oder aus einem flexiblen wasserundurchlässigen Fasermaterial bestehen, vorzugsweise durchsichtiges Material.

9. Vorrichtung nach einem der Ansprüche 1 bis 8, **dadurch gekennzeichnet, dass** die Umhüllung (12) einen verschließbaren Öffnungsschlitz (20) aufweist, der so dimensioniert ist, dass mindestens die zu umhüllenden Teile des Fluidsystems in die Umhüllung (12) einsetzbar sind, wobei der Öffnungsschlitz (20) und einen Klebe-, Klett-, Reiß-, Gleit-, Schiebe- oder Druckverschluss aufweist und vorzugsweise luft- und/oder wasserdicht ist.

10. Vorrichtung nach einem der Ansprüche 1 bis 9, **dadurch gekennzeichnet, dass** in der Umhüllung (12) oder am Auffangbehälter (7) eine Abflussleitung (13, 14) angeordnet ist, die mit einer Abflussleitung (17) vorzugsweise in die Kanalisation mündend verbunden ist.

11. Vorrichtung nach einem der Ansprüche 1 bis 10, **dadurch gekennzeichnet, dass** das in der Umhüllung (12) oder am Auffangbehälter (7) angeordnete Steigrohr (14) in die Abwasserleitung (13) bei einer Umkehr-Osmose-Filteranlage (5), die über einen Kanalisationsanschluss verfügt, über ein hier angeordnetes Rückschlagventil (18) mündet, wobei die Abwasserleitung (13) der Umkehr-Osmose-Filteranlagen (5) im Durchgangsbereich durch die Umhüllung (12) gegenüber dieser abgedichtet ist.

12. Vorrichtung nach einem der Ansprüche 1 bis 11, **dadurch gekennzeichnet, dass** bei Fluidsystemen mit einem unter Druck stehenden Behälter (19) mindestens die Fluidleitung (11) vom Behälter (19) in die Umhüllung (12) integriert ist.

13. Vorrichtung nach einem der Ansprüche 1 bis 12, **dadurch gekennzeichnet, dass** im Auffangbehälter (7) oder in der Umhüllung (12) jeweils bodenseitig ein Bodeneinsatz (21) angeordnet ist, der die Bodenfläche bis auf einen Ausschnitt (22) ausfüllt, in dem mindestens der Signalgeber der Absperreinrichtung (Fluidfluss-Unterbrechungssystem) angeordnet ist, wobei die Deckfläche des Bodeneinsatzes (21) in Richtung Ausschnitt (22) vorzugsweise ein Gefälle aufweist.

14. Vorrichtung nach Anspruch 13, **dadurch gekennzeichnet, dass** das untere Ende des Steigrohres (14) und/oder die Einlassmündung für das Ablassrohr (13) im Ausschnitt (22) positioniert ist.

15. Vorrichtung nach einem der Ansprüche 1 bis 14, **dadurch gekennzeichnet, dass** innen im Bereich der Eingänge für die Überzüge (3) im Abdeckmantel (2) oder in der Umhüllung (12) Spritzschutzelemente angeordnet sind, die das zugeführte Fluid in Richtung Boden leiten.
